# EUROPEAN PATENT SPECIFICATION

(11) **EP 3 681 343 B1**
(45) Date of publication and mention of the grant of the patent: **01.05.2024**
(21) Application number: 18856133.6
(22) Date of filing: 13.09.2018
(51) Int. Cl.: A61C 17/36, H02K 33/16, H02K 7/14, H02P 25/032, A61C 17/20, A61C 17/34, A61C 17/22

(54) **ELECTRIC TOOTHBRUSH WITH FLUID STREAMING CAPABILITY**
ELEKTRISCHE ZAHNBÜRSTE MIT FLÜSSIGKEITSSTRÖMUNGSFÄHIGKEIT
BROSSE À DENTS ÉLECTRIQUE À CAPACITÉ DE DIFFUSION DE FLUIDE

(30) Priority: 13.09.2017 US 201762558123 P; 13.09.2017 US 201762558141 P
(43) Date of publication of application: 22.07.2020
(73) Proprietor: Water Pik, Inc., Fort Collins, CO 80553-0001 (US)
(72) Inventor: WAGNER, Robert D., Firestone Colorado 80504 (US)
(74) Representative: Lloyd, Robin Jonathan
(86) International application number: PCT/US2018/050937
(87) International publication number: WO 2019/055694

(56) References cited:
- CA-A1- 2 994 624
- CN-A- 107 088 103
- US-A- 6 047 429
- US-A1- 2002 152 565
- US-A1- 2013 207 575
- US-A1- 2014 259 474
- US-A1- 2017 007 384

## Description

### TECHNICAL FIELD

The present disclosure relates to oral health products. More specifically, the present disclosure relates to electric toothbrushes and oral irrigating devices.

### BACKGROUND

The state of the art in sonic toothbrush technology centers around drive systems that create a desired oscillating toothbrush output motion by using electro-magnetic drivers and centering return springs to directly create oscillating motion.

Present oral irrigator devices are standalone units that provide a pulsing water jet stream using a dedicated, unique handle and an irrigating tip that are fluidly connected via a tube to a pump and a reservoir in a countertop base unit. There are some travel oral irrigator devices that combine a battery, a pump, and a small reservoir in a handheld unit.. There are also some devices known as "combo" units that provide toothbrush function along with an irrigating function from a single unit. One such device is known from CN107088103A. These devices essentially take an oral irrigation base unit with a handle and tip assembly, enlarge the base unit, and add a separate sonic toothbrush handle that sits on the enlarged base and may be charged when stored on the base. Separate handles are required to provide each of irrigation and toothbrush functions.

The information included in this Background section of the specification, including any references cited herein and any description or discussion thereof, is included for technical reference purposes only and is not to be regarded subject matter by which the scope of the invention as defined in the claims is to be bound.

### SUMMARY

The invention pertains to an electric toothbrush as defined in independent claim 1. Advantageous aspects are defined in the dependent claims 2-10. In one implementation, the technology disclosed herein relates to an electric toothbrush having both sonic, pivoting brush head movement and a capability to dispense a pressurized fluid from the brush head. The toothbrush includes a power supply, an electromagnetic coil connected to the power supply, and a magnet. The toothbrush also includes a drive shaft defining a fluid conduit therein and a fluid inlet positioned along a length thereof. A brush tip is connected to a distal end of the drive shaft. The brush tip includes a brush head, a fluid outlet within the brush head, and a fluid conduit defined within the brush tip that is fluidicly connected to the fluid conduit in the drive shaft. The magnet is attached to the drive shaft and positioned within a magnetic field of the electromagnetic coil. A fluid tube is connected at a first end to the fluid inlet on the drive shaft and configured for connection to a fluid source at a second end.

In another implementation, the technology disclosed herein relates to an electric toothbrush having both sonic, pivoting brush head movement and a capability to dispense a pressurized fluid from the brush head. The toothbrush includes a drive shaft defining a fluid conduit therein and a fluid inlet positioned along a length thereof. The toothbrush also includes a power supply and an electromagnetic coil mounted on the drive shaft and connected to the power supply. A brush tip is connected to a distal end of the drive shaft. The brush tip includes a brush head, a fluid outlet within the brush head, and a fluid conduit defined within the brush tip that is fluidicly connected to the fluid conduit in the drive shaft. A first pole piece is attached to the drive shaft and positioned within a first magnetic field of the electromagnetic coil. A first permanent magnet assembly is arranged circumferentially about the first pole piece. A second pole piece is attached to the drive shaft and positioned within a second magnetic field of the electromagnetic coil. A second permanent magnet assembly is arranged circumferentially about the second pole piece. A fluid tube is connected at a first end to the fluid inlet on the drive shaft and configured for connection to a fluid source at a second end.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. A more extensive presentation of features, details, utilities, and advantages of the present invention as defined in the claims is provided in the following written description of various embodiments and implementations and illustrated in the accompanying drawings.

### BRIEF DESCRIPTION OF THE DRAWINGS

The accompanying drawings described briefly below are provided to aid in the understanding of the technology and various exemplary embodiments thereof described in greater detail herein. Like reference numerals designate like structural elements within the various views of the drawing figures.
Fig. 1 is an isometric view of an embodiment of an electric toothbrush with fluid streaming capability with the housing and brush tip removed.
Fig. 2 is an isometric, cutaway view of the electric toothbrush with fluid streaming capability of Fig. 1.
Fig. 3 is a left side, cutaway view of the electric toothbrush with fluid streaming capability of Fig. 1.
Fig. 4 is an exploded isometric view of the electric toothbrush with fluid streaming capability of Fig. 1.
Fig. 5 is an isometric view of an exemplary embodiment of a brush tip for attachment to the electric toothbrush with fluid streaming capability of Fig. 1.
Fig. 6 is a right side elevation view in cross-section of the brush tip of Fig. 5.
Fig. 7 is an isometric, cutaway view of an alternate embodiment of an electric toothbrush with fluid streaming capability.
Fig. 8 is a left side, cutaway view of the electric toothbrush with fluid streaming capability of Fig. 7.
Fig. 9 is an isometric, cutaway view of an alternate embodiment of an electric toothbrush with fluid streaming capability.
Fig. 10 is a left side, cutaway view of the electric toothbrush with fluid streaming capability of Fig. 9.
Fig. 11 is an exploded isometric view of the electric toothbrush with fluid streaming capability with the housing, chassis, and brush tip removed.
Fig. 12 is an elevation, cutaway view of the electric toothbrush with fluid streaming capability of Fig. 11.
Fig. 13 is an elevation, cutaway view of an alternate embodiment of an electric toothbrush with fluid streaming capability.
Fig. 14 is an isometric view in cross section of an alternate embodiment of an electric toothbrush with fluid streaming capability.
Fig. 15 is a top plan view in cross section of the electric toothbrush with fluid streaming capability of Fig. 13 along line 15-15 detailing the interface between the bottom pole piece and the permanent magnets.
Fig. 16 is a top plan view in cross section of the electric toothbrush with fluid streaming capability of Fig. 13 along line 16-16 detailing the form of the counterweight.

The use of cross-hatching or shading in the accompanying figures is generally provided to clarify the boundaries between adjacent elements and also to facilitate legibility of the figures. Accordingly, neither the presence nor the absence of cross-hatching or shading conveys or indicates any preference or requirement for particular materials, material properties, element proportions, element dimensions, commonalities of similarly illustrated elements, or any other characteristic, attribute, or property for any element illustrated in the accompanying figures.

Additionally, it should be understood that the proportions and dimensions (either relative or absolute) of the various features and elements (and collections and groupings thereof) and the boundaries, separations, and positional relationships presented therebetween are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Embodiments of sonic toothbrushes are presented that feature a replaceable toothbrush head driven by a drive shaft that moves in an arcuate rotary motion about the drive shaft axis. The rotary movement of the shaft is generated by a voice coil-type motor. An electromagnet is provided on a core in the handle of the toothbrush that acts upon a magnet secured to a mounting plate that is in turn secured to the drive shaft. The opposing ends of the drive shaft are mounted in bushings or bearings that allow the shaft to rotate on its axis. The drive shaft is hollow and tubular along all or a portion of its length to allow fluid flow from a fluid source through the driveshaft for dispensation of water or other fluid in a high energy stream through the toothbrush head. A port is configured along the drive shaft for attachment to a tube or hose that connects with a pressurized water source. The water source may be an oral irrigator base unit with a water reservoir and a pump that provides pulsating water flow for cleaning teeth and massaging gums.

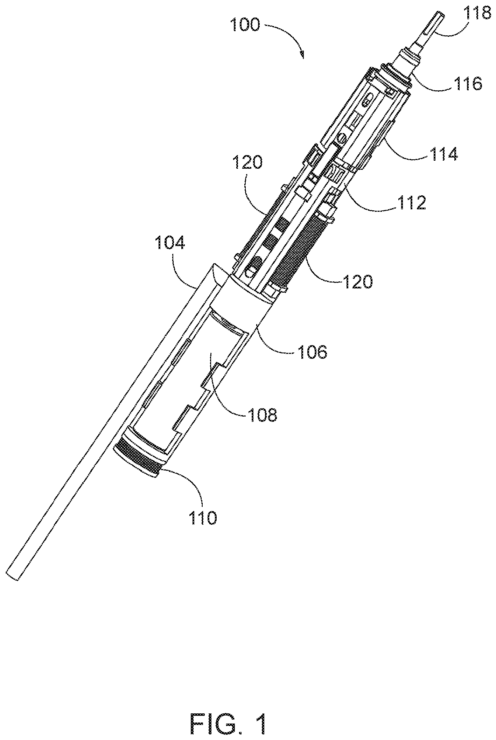

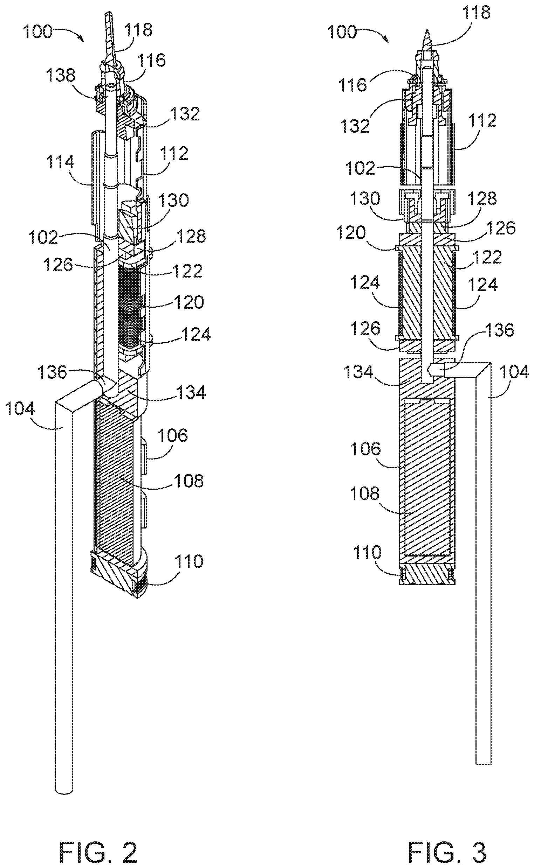

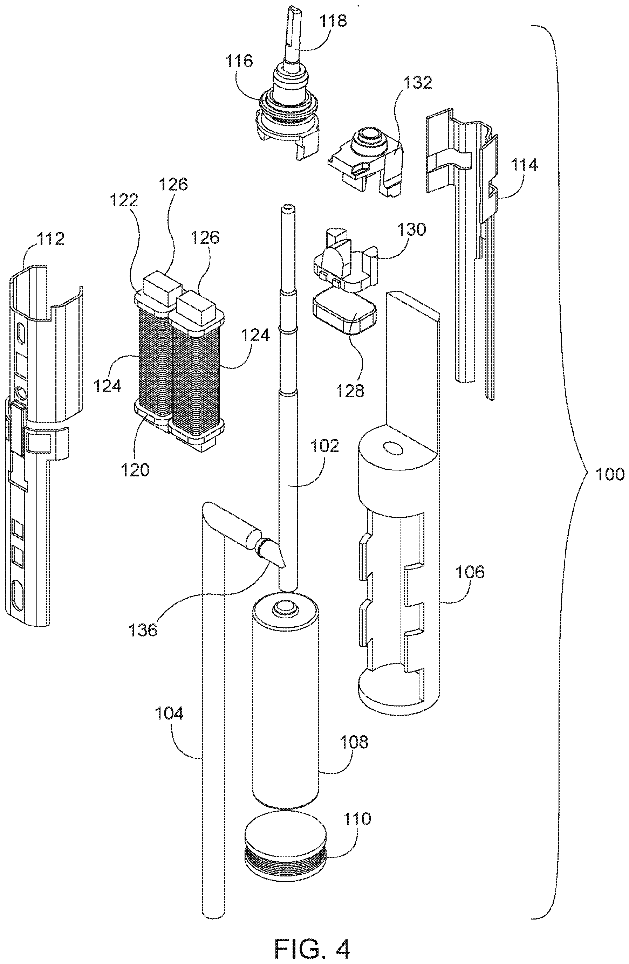

One exemplary embodiment of an electric toothbrush 100 with a fluid streaming capability is shown in Fig. 1 with the housing and toothbrush head removed. Figs. 2-4 further depict the electric toothbrush 100 in cutaway and exploded views for better appreciation of the components. The components of the electric toothbrush 100 are supported by a lower chassis 106, a front chassis 112, and a rear chassis 114. A power supply 108 (e.g., a rechargeable battery) is contained within the lower chassis 106 and an charging coil 110 is secured to the bottom of the lower chassis 106 and is electrically connected to the power supply 108 through a control circuit that creates an alternating flow of current in the coil. The electric toothbrush 100 may be provided in combination with a charging base that creates an inductive charging circuit to charge the power supply 108. The top end of the lower chassis 106 may provide a bushing or bearing pocket 134 that receives the bottom end of a drive shaft 102.

In the embodiment of Figs. 1-4, the drive shaft 102 may be formed as a hollow tube along its length, capped or plugged or solid at the bottom end at the interface with the bearing pocket 134. An inlet port 136 may be formed adjacent to the base of the drive shaft 102. The inlet port 136 may have a barbed or ribbed outer circumference for creating a fluid tight seal connection with a fluid tube 104. The fluid tube 104 may be an elastomeric hose or of similar construction that will allow the fluid tube 104 to move back and forth as the drive shaft 102 rotates back and forth on its axis as further described herein. In another embodiment, the drive shaft 102 may be designed with the fluid inlet port 136 positioned axially on the distal end. In such an embodiment, the lower chassis 106 may be designed to provide clearance between the power supply 108 and the bearing pocket 134 for attachment of the fluid tube 104.

Alternatively, the power supply 108 and the charging coil 110 may be positioned in the housing axially offset from the axis of the drive shaft 102. In this configuration, the fluid tube 104 may be positioned in direct or straight axial alignment with the drive shaft 102 along the axis of rotation. This configuration minimizes the rotational moment of inertia due to the fluid tube 104, which reduces the electrical current draw needed to operate the electric toothbrush 100. This increases the number of brush cycles per charge of the power supply 108. In these embodiments, the drive shaft 102 is formed with a shoulder, flange, or other circumferential bearing structure to interface with the bearing pocket 134 while providing clearance for attachment of the fluid tube 104 to the inlet port 136.

The fluid tube 104 may extend out of the housing of the electric toothbrush 100 to directly connect with a pressurized water source. Alternatively, the fluid tube 104 may connect to an intermediate connection structure within the electric toothbrush 100, which in turn is connected with a pressurized water source. In a further embodiment, an embodiment of the electric toothbrush may include a self-contained reservoir and pump to which the fluid tube 104 may be fluidicly connected.

The drive shaft 102 may extend upward from bearing pocket 134 at the top of the lower chassis 106 between the front chassis 112 and the rear chassis 114. The front chassis 112 and rear chassis 114 may connect together to support various components of a drive train for the electric toothbrush 100 and may further connect to the top of the lower chassis 106. A pair of electromagnetic coils 120 may seat above the lower chassis 106 between the front chassis 112 and the rear chassis 114. The drive shaft 102 may extend alongside or between the coils 102 or partially both depending upon the design of and separation distance between the coils 120. In the exemplary embodiment of Figs 1-4, the coils 120 may be formed on a single bobbin 122 that supports the two iron core laminations 126 about which the wire windings 124 are wound. The coils 120 are oriented vertically within the front chassis 112 and the rear chassis 114 such that first ends of the core laminations 126 seat on the top of the lower chassis 106 and second opposing ends of the core laminations 126 extend upward adjacent to the drive shaft 102.

A mounting bushing 130 (or bearing or pillow block structure) is moveably or pivotably held between the front chassis 112 and the rear chassis 114 above the top end of the coils 120. The mounting bushing 130 may be fixedly attached to the drive shaft 102 but free to rotate within the volume defined by the front chassis 112 and the rear chassis 114. A magnet 128 may be mounted to the bottom of the mounting bushing 130 just above and adjacent to the second ends of the core laminations 126 extending from the coils 120. The magnet 128 may be formed of a high strength magnetic material such as Neodymium Iron Boron (NdFeB) alloy or other rare earth or ceramic material.

A bearing bushing 132 may be held between and supported by the top ends of front chassis 112 and the rear chassis 114. The distal end of the drive shaft 102 may pass through the bearing bushing 132 and be pivotably supported thereby. It may be desirable that the mounting bushing 130 be positioned substantially midway between the bearing pocket 134 the bearing bushing 132 in order to provide balance to the drive shaft 102 as it rotates. The length of the drive shaft 102 and the size of other components may thus be engineered in order to provide for midpoint placement of the mounting bushing 130. This sizing may primarily depend upon the size of the coils 120 needed to generate the necessary magnetic field force for rotation of the drive shaft 102. A boot seal 116 may be attached to the distal end of the bearing bushing 132 and the distal end of the drive shaft 102 may terminate within a cavity defined within the boot seal 116. The boot seal 116 may create a fluid tight seal with the bearing bushing 132.

A brush shaft 118 may extend through a distal opening in the boot seal 116 and attach to the distal end of the drive shaft 102. The brush shaft 118 may define a hollow core for the flow of fluid from the drive shaft 102 through the brush shaft 110 and ultimately to an attached brush tip. The outer surface of the distal end of the drive shaft 102 may be keyed and an inner surface of the brush shaft 118 may be opposingly keyed in order to create a an interface to transfer the reciprocating drive torque from the drive shaft 102 to the brush shaft 118. A gasket or seal 138 (e.g., and O-ring) may be interposed between the outer diameter of a surface of the drive shaft 102 and an inner diameter of the brush shaft 118 in order to create a fluid tight seal therebetween. In an alternate embodiment, the brush shaft 118 may be formed as a unitary piece with the drive shaft 102 and form the distal end thereof.

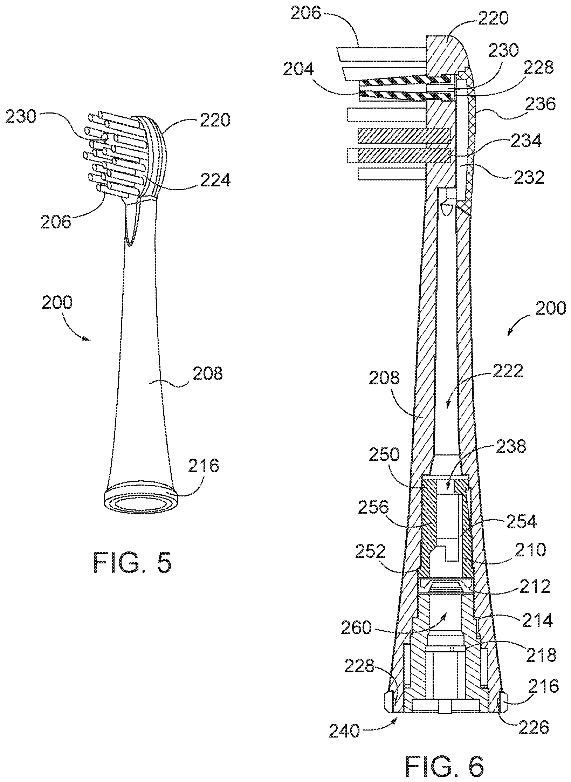

Various tips can be used with the irrigating toothbrush device 100. One example of a brush tip that can be used with the irrigating toothbrush device is disclosed in U.S. Patent Application Publication No. 2014/0259474. Another example is shown in Figs. 5 and 6, which illustrate various views of one example of a brush tip 200. With reference to Figs. 5 and 6, the brush tip 200 includes a tip shaft 208 with a brush head 220 extending from a distal end thereof. The tip shaft 208 defines a fluid passage 222 therethrough to the brush head 220. The brush head 220 defines a bristle base 224 composed of a plurality of recesses 234 into which a plurality of bristle tufts 206 may be inserted and secured in place.

In addition, the brush head 220 defines a nozzle aperture 230 that opens in the bristle base 224 in an area surrounded by bristle tufts 206. An elastomeric jet nozzle 204 is positioned within the nozzle aperture 230 and extends normal to the bristle base 224 approximately the same distance as the bristle tufts 206. The nozzle 230 defines a fluid lumen and may be generally conical and may taper in diameter from its base to its tip. A cavity 232 may be formed in the back of the brush head 220 to provide access to the nozzle aperture and a fluid flow connection between the nozzle aperture and the fluid passage 222. The cavity 232 may be enclosed by a brush head plug 236 that snaps into the sidewalls defining the cavity 330 and is ultrasonically welded or otherwise adhered to provide a fluid-tight seal in the brush head 220.

A retainer 210 may be inserted into and permanently affixed within the fluid passage 222 from the base end 240 of the tip shaft 208. In the exemplary implementation shown, the retainer 210 may be generally formed as a frustum with open sidewalls. A top ring 250 is joined to a larger diameter bottom ring 252 by an alignment rib 254 on one side and a support rib 256 laterally opposed thereto. The top ring 250 defines an outlet aperture 238. The distal end of the brush shaft 118 may have a keyed profile. The inner wall of the retainer 210 may have a corresponding keyed profile to interface with the brush shaft 118 and thereby translate the motion of the brush shaft 118 to the brush tip 200 and ultimately to the brush head 220 and bristles 206.

A sealing element 212, such as a U-cup, may be inserted into the fluid passage 222 of the tip shaft 208 after the retainer 210 and may be held in place against the retainer 210 by an end cap 214. In this exemplary implementation, the end cap 214 is formed as a series of stacked cylinders with decreasing diameters as they extend toward the brush head 220. The end cap 214 defines a lumen 260 through which the brush shaft 118 passes when the brush tip 200 is placed on the electric toothbrush 100. A releasable retainer structure (not shown, but as described, for example, in US2014/0259474) may be provided to cooperate with the retainer 210 to releasably connect the brush tip 200 to the brush shaft 118. Alternately, a releasable retainer structure may be provided to cooperate with an external surface of the boot seal 116 in order to attach the brush tip 200 to the electric toothbrush 100.

A trim ring 216 may be attached to the base 240 of the tip shaft 208 to allow for multiple users of the electric toothbrush 100 to easily identify their personal brush tip 200 for attachment to the brush shaft 118. For example, trim rings 216 may be provide in various colors to identify different user's brushes. The base 240 of the tip shaft 208 may define a recess with a retention groove 226. The inner wall of the colored trim ring 216 may define a number of retention detents 228 that may snap into the retention groove 226 to retain the colored trim ring 216 around the base of the brush tip 200.

In operation, the coils 120 are energized in alternating directions, thus creating attractive and repellant magnetic fields at the second ends of the core laminations 126.

These magnetic fields opposingly attract and repel the opposing ends of the magnet 128 mounted on the bottom of the mounting bushing 130 as the current alternates direction in each coil 120. For example, if a first end of the magnet 128 of a North polarization is positioned above a first coil 120 and second end of the magnet 128 of a South polarization is positioned above a second coil 120, energizing the coils in a first direction will simultaneously attract the North end of the magnet 128 toward the first coil 120 and repel the South end of the magnet 128 from the second coil 120. When the current direction is switched, the North end of the magnet 128 is repelled from the first coil 120 and the South end of the magnet 128 is attracted toward the second coil 120. The drive shaft 102 may be restrained from vertical axial movement through its interface with the bearing pocket 134 at its proximal end and the bearing bushing 132 at its distal end. For example, the drive shaft 102 may be formed with a shoulder that interfaces with a surface of the bearing bushing 132 which prevents distal vertical travel. By restraining any vertical movement of the drive shaft 102, only the portion of the magnetic field transverse to the axis of the drive shaft 102 affects the drive shaft 102 and thus causes the drive shaft 102 to rotate or pivot back and forth on its axis as the coils 120 are alternately energized.

The current in the coils 120 may be alternated at a high speed (e.g., 250 Hz) in order to create a sonic brushing effect. The pressurized water source may be actuated simultaneously while the electric toothbrush 100 is actuated or it may be actuated at a separate time, i.e., while the electric toothbrush 100 is "off." In this latter state, the electric toothbrush 100 can be used in a similar manner to a traditional oral irrigator or a user may simultaneously perform manual brushing techniques.

In an alternate embodiment, the drive shaft of the electric toothbrush may be fixedly attached to a torsion bar which is pivotably mounted within the chassis. The magnet may in turn be attached to the torsion bar such that the energization of the coils rotates or pivots the torsion bar, which thereby actuates the drive shaft. The torsion bar may be formed a s a flat spring plate that twists in response to the alternating magnetic fields and thus causes the drive shaft to reciprocally rotate. It may be desirable to use an intermediate torsion bar to take advantage of the spring response which stores and releases energy and thus may impart a greater force to the brush tip and further provide mechanical resistance to opposing torsional forces on the brush tip when the bristles interact with a user's teeth.

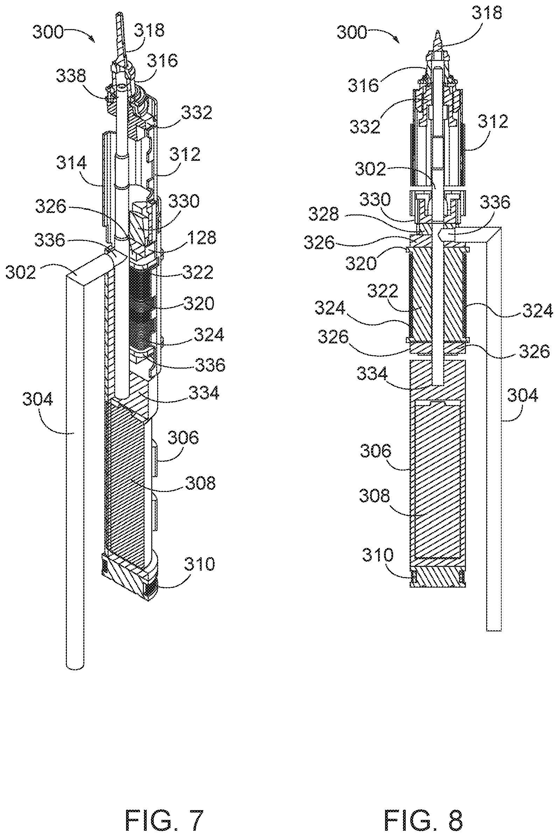

Another alternate embodiment of an electric toothbrush 300 with fluid streaming capability, which is not according to the claimed invention, is depicted in Figs. 7 and 8. Like components in Figs. 7 and 8 with the embodiment of Figs. 1-4 are numbered with a base of 300 rather than 100, but not all components of Figs. 7 and 8 are specifically referenced in the discussion of this embodiment as they are the same as the prior embodiment of Figs. 1-4. In this embodiment, the fluid tube 304 is attached to the drive shaft 302 of the electric toothbrush 300 at or near the midpoint of the length of the drive shaft 302. The bottom portion of the drive shaft 302 may be solid or filled or similarly plugged or capped at the proximal end as in the first embodiment to ensure that the pressurized fluid is directed to the brush tip. The inlet port 336 is thus positioned along the drive shaft 302 adjacent to the magnet 328 and mounting bushing 330. In this way the influence of the moment exerted on the drive shaft 302 due to the mass of the inlet port 336 and the fluid tube 304 attached thereto is minimized because of the more equal distribution of the mass of the drive shaft 302 on each side. In an alternate embodiment, the portion of the drive shaft 302 below the inlet port 336 may be shortened and the bushing or bearing pocket 334 may be moved distally to another location within the electric toothbrush 300. The bearing pocket 334 may be a separate structure supported in various locations by the front and rear chassis 312, 314.

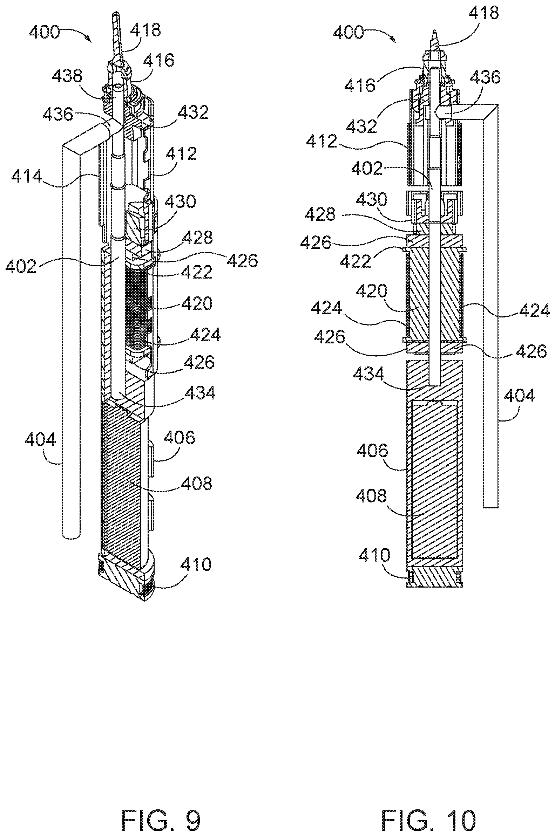

A further alternate embodiment of an electric toothbrush 400 with fluid streaming capability, which is not according to the claimed invention, is depicted in Figs. 9 and 10. Like components in Figs. 9 and 10 with the embodiment of Figs. 1-4 are numbered with a base of 400 rather than 100, but not all components of Figs. 9 and 10 are specifically referenced in the discussion of this embodiment as they are the same as the prior embodiment of Figs. 1-4. In this embodiment, the fluid tube 404 is attached to the drive shaft 402 of the electric toothbrush 400 at or near the distal end of the length of the drive shaft 402. The inlet port 436 is thus positioned along the drive shaft 402 adjacent to the bearing bushing 432. The bottom portion of the drive shaft 402 may be solid or filled or similarly plugged or capped at the proximal end as in the first embodiment to ensure that the pressurized fluid is directed to the brush tip. In an embodiment in which the shaft is solid or filled along its length below the inlet port 436, the influence of the moment exerted on the drive shaft 402 due to the mass of the inlet port 436 and the fluid tube 404 attached thereto is minimized because the mass of the drive shaft 402 below the inlet port 436 counteracts the moment.

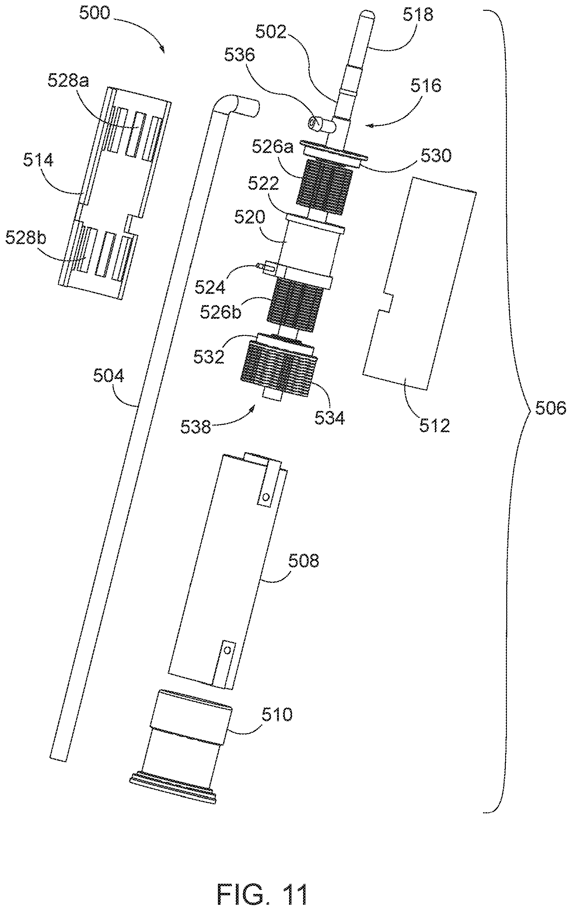

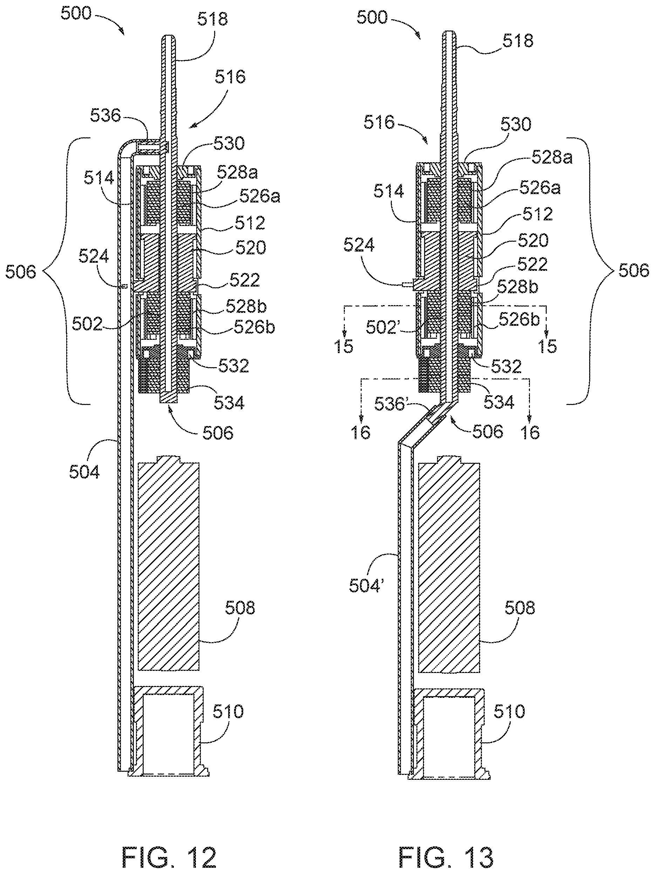

A further exemplary embodiment of an electric toothbrush 500 with a fluid streaming capability, which is not according to the claimed invention, is shown in Fig. 11 in an exploded view with the housing, support chassis, and toothbrush head removed. Figs. 12 further depicts the electric toothbrush 500 in a cutaway view for better appreciation of the structural interaction of the components. A power supply 508 (e.g., a rechargeable battery) is positioned toward the bottom of the electric toothbrush 500. A charging coil 510 is positioned below the power supply 508 and is electrically connected to the power supply 508 through a control circuit that creates an alternating flow of current in the coil. The electric toothbrush 500 may be provided in combination with a charging base that creates an inductive charging circuit to charge the power supply 508.

A drive assembly 506 is positioned above the power supply 508. The drive assembly 506 dives the brush head of the electric toothbrush 500 with an oscillating rotational action through a selected angle. The drive assembly 506 is substantially contained within an elongated, cylindrical case formed of a front cover 512 and a rear cover 514. In some embodiments the front cover 512 and rear cover 514 may be made of metal with high magnetic permeability. A number of permanent magnets are mounted on the interior (concave) wall of each of each of the front cover 512 and the rear cover 514. A magnet assembly 528a may be mounted circumferentially around and affixed to the front cover 512 and the rear cover 514 toward a distal end 516 of the drive assembly 506. Similarly, a second magnet assembly 528b may be mounted circumferentially around and affixed to a top portion of the front cover 512 and the rear cover 514 toward a proximal end 538 of the drive assembly 506. While the embodiment of Figs. 11 and 12 provides a gap between adjacent magnets in each magnet assembly 528a, 528b, the individual magnets could abut each other. Further, the magnets could be formed as cylindrical sections to conform to the convex surfaces of the interior walls of the front and rear covers 512, 514. The magnets in the assemblies 528a, 528b may be formed of a high strength magnetic material such as Neodymium Iron Boron (NdFeB) alloy or other rare earth or ceramic material.

In the exemplary embodiment of Figs. 11 and 12, ten elongate (e.g., rectangular) magnets comprising the first magnet assembly 528a are arranged parallel to each other and mounted to the front cover 512 and the rear cover 514. Similarly, ten elongate (e.g., rectangular) magnets comprising the second magnet assembly 528b are arranged in parallel and mounted to a bottom portion of the front cover 512 and the rear cover 514. Each of the individual magnets in each of the first and second magnet assemblies 528a, 528b are arranged to alternate circumferentially between north/south polarity. However, the magnets in the first magnet assembly 528a of the drive assembly 506 are positioned so that the magnetic poles alternate opposite to that of the second magnet assembly 528b, i.e., longitudinally a north polarity of a magnet in the first magnet assembly 528a is in registry with a south polarity of a magnet in the second magnet assembly 528b.

In the embodiment of Figs. 11 and 12, a drive shaft 502 may extend longitudinally through a center of the drive assembly 506. The drive shaft 502 may be formed as a hollow tube along its length, capped or plugged or solid at the bottom end at the proximal end 538 of the drive assembly 506. The drive shaft 502 is preferably made of a magnetic material. An inlet port 536 may be formed within the drive shaft 502 adjacent to the distal end of the drive assembly 516. A tip connector portion 518 of the drive shaft 502 may extend further distally beyond the drive assembly 506. The inlet port 536 may have a barbed or ribbed outer circumference for creating a fluid tight seal connection with a fluid tube 504. The fluid tube 504 may be an elastomeric hose or of similar construction that will allow the fluid tube 504 to move back and forth as the drive shaft 502 rotates back and forth on its axis as further described herein.

A bearing structure (not shown) may be held between and supported by a chassis or the housing above the drive assembly 506. The distal end of the drive shaft 502 may pass through the bearing structure and be pivotably supported thereby, for example, through engagement with a shoulder or flange formed on the drive shaft 502. The length of the drive shaft 502 and the size of other components may thus be engineered in order to provide for placement of the distal bearing structure such that the tip connection portion 518 extends distally beyond the bearing structure. Further, in the embodiment of Figs. 11 and 12, the position of the bearing structure and the length of the drive shaft 502 need to provide clearance for the inlet port 536 and the fluid tube 504 attached thereto.

In another embodiment, as shown in Fig. 13, the fluid inlet port 536' is positioned on the proximal end of the drive shaft 502' extending from the proximal end 538 of the drive assembly 506. In such an embodiment, a chassis (not shown) may be designed to provide clearance between the power supply 508 and the drive assembly 506 for attachment of the fluid tube 504'. The proximal end of the drive shaft 502' is formed with a shoulder, flange, or other circumferential bearing structure to interface with a bearing structure supported by the chassis while providing clearance for attachment of the fluid tube 504' to the inlet port 536'.

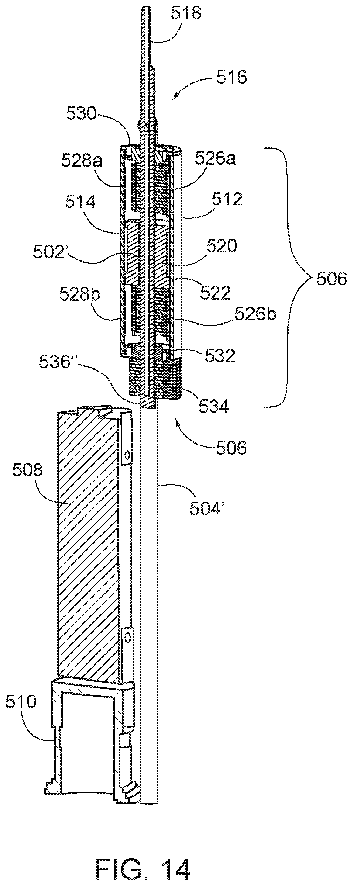

In another embodiment, as shown in Fig. 14, the fluid inlet port 536" may be positioned on the proximal end of the drive shaft 502" extending from the proximal end 538 of the drive assembly 506. In such an embodiment, the power supply 508 and the charging coil 510 may be positioned in the housing axially offset from the axis of the drive shaft 502" in the drive assembly 506. In this configuration, the fluid tube 504" may be positioned in direct or straight axial alignment with the drive shaft 502" along the axis of rotation. This configuration minimizes the rotational moment of inertia due to the fluid tube 504", which reduces the electrical current draw needed to operate the drive assembly 506. This increases the number of brush cycles per charge of the power supply 508. The proximal end of the drive shaft 502" may again be formed with a shoulder, flange, or other circumferential bearing structure to interface with a bearing structure supported by the chassis while providing clearance for attachment of the fluid tube 504" to the inlet port 536".

In any of these alternative embodiments, the fluid tube 504 may extend out of the housing of the electric toothbrush 500 to directly connect with a pressurized water source. Alternatively, the fluid tube 504 may connect to an intermediate connection structure within the electric toothbrush 500, which in turn is connected with a pressurized water source. In a further embodiment, an embodiment of the electric toothbrush may include a self-contained reservoir and pump to which the fluid tube 504 may be fluidicly connected.

An electromagnetic coil 520 may be wound around the drive shaft 502 and positioned longitudinally between the permanent sets of permanent magnets 528a, 528b in the front and rear covers 512, 514. The coil 520 includes a cylindrical wire winding around a bobbin 522 with a magnetic (e.g., iron core) to direct a generated magnetic field longitudinally along the center axis of the drive shaft 502. Typically the winding is a copper wire coil and the number of turns may depend upon several factors including battery voltage, the desired output power, and the size of the power assembly 506. Winding contacts 524 may extend from a base of the bobbin 522 for connection to the power supply 508 through a control circuit (not shown).

Two magnetic pole pieces 526a, 526b are fixedly mounted to the drive shaft 502 on opposing ends of the electromagnetic coil 520 between a top bearing cap 530 and a bottom bearing cap 532. The pole pieces 526a, 526b are positioned, respectively, in the areas bounded by the sets of permanent magnets 528a, 528b. The pole pieces 526a, 526b are both made of a magnetic material, for example, iron. In the embodiment shown, each pole piece 526a, 526b is formed as a lamination of multiple thin plates. Each plate is stamped or otherwise formed in the shape of a cog as can be seen in the cross section view in Fig. 5. When the plates are laminated, the pole pieces 526a, 526b define a number of longitudinal projections 540 arranged equidistantly apart and joined at their bases to form a ring portion 543 that attaches to the drive shaft 502. Each projection 540 may increase slightly in width from ring portion 543 to the free end of the projection 540 to for a trapezoidal shape. Each of the projections 540 is separated from adjacent projections 540 by gaps or channels 542.

The free ends of the projections 540 may extend almost to the sets of magnets 528a, 528b on the front and rear covers 512, 514 with only a small gap between them. The free end surface of each projection 540 may be slightly convexly curved as shown. The number of projections 540 on the pole pieces 526a, 526b in the magnetic pole assembly may be one-half the number of individual magnets in the associated permanent magnet assemblies 528a, 528b. Thus in the exemplary embodiments shown in the figures, each pole piece 526a, 526b has five projections 540. In other embodiments, however, the number of magnets in the magnet assemblies, and hence the number of projections 540 on the pole pieces 526a, 526b in the magnetic pole assemblies, will be different, corresponding to half the number of magnets in each permanent magnet assembly.

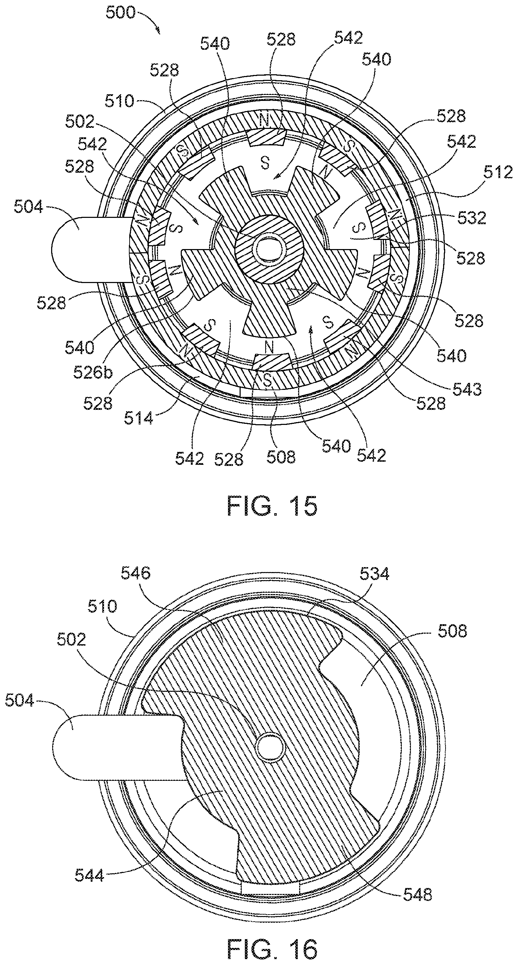

A counterweight 534 may also be mounted about the drive shaft 502 beneath the lower pole piece 526b and outside of the drive assembly 506. The counterweight 534 may be provided to balance the weight of the brush head when connected to the tip connector portion 518 of the drive shaft and counter the resistance forces when the brush head engages a user's teeth. The counterweight 534 may be made of laminated plates of metal, similar to the pole pieces 526a, 526b. The individual plates may be stamped in symmetric or asymmetric shapes before lamination in order to provide appropriate balance to the drive shaft 502 based upon mass modeling results. As shown in the cross-section view of Fig. 16, in the example embodiment, the counterweight 534 is asymmetrically shaped with a large bulbous extension 546 at a first circumferential side and a small bulbous extension 548 at an opposing second circumferential side.

The distal end of the drive shaft 502 may form a tip connection portion 518 to connect with a removable brush tip, for example, a brush tip as described above with respect to Figs. 5 and 6. The tip connection portion 518 may define a hollow core for the flow of fluid from the drive shaft 502 and ultimately to an attached brush tip. The outer surface of the tip connection portion 518 may be keyed and an inner surface of the brush tip may be opposingly keyed in order to create an interface to transfer the reciprocating drive torque from the drive shaft 502 to the brush tip. One or more gaskets or seal s (e.g., an O-ring) may be interposed between the outer diameter of a surface of the tip connection portion 518 and an inner diameter of the brush tip in order to create a fluid tight seal therebetween.

Before actuation, in the unmagnetized state, the pole pieces 526a, 526b will each face a north/south boundary of the permanent magnet sections in the circumferential direction of the permanent magnet assemblies 528a, 528b. In operation, an energizing signal is generated from the control circuit and directed to the electromagnetic coil 520 through the winding contacts 524. An energizing signal will typically be an alternating signal (e.g., a square wave) about zero produced by a full bridge circuit from a DC signal, although an AC signal can also be used. The frequency of the signal can vary, although preferably it is near the resonant frequency of the system. One-half of the square wave energizing signal in the positive direction will result in one of the pole pieces 526a being magnetized to north, while the other magnetic pole piece 526b will be magnetized south.

The energizing signal will result in the two magnetic pole pieces 526a, 526b rotating such that the projections 540 are aligned approximately at the mid-point of a corresponding magnet in the adjacent magnet assemblies 528a, 528b. The drive shaft 502 will thus rotate on its access as the pole pieces 526a, 526b are attached thereto. For example, if the upper pole piece 528a is magnetized north while the lower pole piece 528b is magnetized south in the field generated by the coil 520, the first action will be a rotation of the drive shaft 502 counterclockwise, so that the magnets in the upper magnet assembly 528a with inward directed south poles will face the north magnetized projections 540 of the upper pole piece 526a by magnetic attraction and the magnets with inward directed north poles will repel the north magnetized projections 540. Similarly, as shown in Fig. 15, the lower pole piece 526b will produce the same counterclockwise rotation because of the complimentary (opposite) position of the permanent magnets in the lower magnet assembly 528b. In particular, the permanent magnets in the lower magnet assembly 528b with inward directed north poles will face the south magnetized projections 540 of the lower pole piece 526b by magnetic attraction and the magnets with inward directed south poles will repel the south magnetized projections 540. The energizing square wave will return to zero and then go in the negative direction, resulting in a clockwise rotation of the drive shaft 502 when the upper pole piece 526a is magnetized south and the lower pole piece 526b is magnetized north. The upper pole piece 526a will rotate so that its projections 540 face the permanent magnets in the upper magnet assembly 528a with inward directed north poles and the lower pole piece 526b in assembly 506 will rotate so that its projections 540 face the permanent magnets in the lower magnet assembly 528b with inward directed south poles.

The repetitive square wave in both directions about zero will result in a back-and-forth oscillation of drive shaft 502, through an angle which depends upon the number of permanent magnets in the magnet assemblies 528a, 528b and the corresponding number of projections 540 on the pole pieces 526a, 526b. For example, in an embodiment with a total of 12 magnets in each permanent magnet assembly, the angle of oscillation will be approximately ±15°.

All directional references (e.g., proximal, distal, upper, lower, upward, downward, left, right, lateral, longitudinal, front, back, top, bottom, above, below, vertical, horizontal, radial, axial, clockwise, and counterclockwise) are only used for identification purposes to aid the reader's understanding of the structures disclosed herein, and do not create limitations, particularly as to the position, orientation, or use of such structures. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order and relative sizes reflected in the drawings attached hereto may vary.

The above specification, examples and data provide a complete description of the structure and use of exemplary embodiments of the invention as defined in the claims. Although various embodiments of the claimed invention have been described above with a certain degree of particularity, or with reference to one or more individual embodiments, those skilled in the art could make numerous alterations to the disclosed embodiments without departing from the scope of the claimed invention. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

## Claims

1. An electric toothbrush (100) comprising
a power supply (108);
a drive shaft (102) defining a fluid conduit therein and a fluid inlet (136) positioned at a proximal end thereof, said drive shaft extending from a proximal end of a drive assembly;
a brush tip (200) connected to a distal end of the drive shaft, wherein the brush tip includes a brush head (220), a fluid outlet within the brush head, and a fluid conduit (222) defined within the brush tip that is fluidly connected to the fluid conduit in the drive shaft;
an electromagnetic coil (120) connected to the power supply;
a magnet (128) attached to the drive shaft and positioned within a magnetic field of the electromagnetic coil;
a fluid tube (104) connected at a first end to the fluid inlet on the drive shaft and configured for connection to a fluid source at a second end; and
a chassis (106); wherein
the chassis provides clearance between the power supply and the drive assembly for attachment of the fluid tube to the fluid inlet; and
the proximal end of the drive shaft is formed with a shoulder, flange, or other circumferential bearing structure to interface with a bearing structure supported by the chassis while providing clearance for attachment of the fluid tube to the inlet port.

2. The electric toothbrush of claim 1, wherein the brush tip is removably connected to the drive shaft.

3. The electric toothbrush of claim 1, wherein the fluid tube is connected axially to the proximal end of the drive shaft.

4. The electric toothbrush of claim 1, wherein the drive shaft extends longitudinally through a center of the drive assembly.

5. The electric toothbrush of claim 4, wherein the drive shaft is formed as a hollow tube along its length, capped or plugged or solid at a proximal end.

6. The electric toothbrush of claim 1, wherein the fluid inlet has a barbed or ribbed outer circumference for creating a fluid tight seal connection with the fluid tube.

7. The electric toothbrush of claim 1, wherein the power supply and a charging coil are axially offset from an axis of the drive shaft.

8. The electric toothbrush of claim 7, wherein the fluid tube is positioned in direct or straight axial alignment with the drive shaft along an axis of rotation of the drive shaft.

9. The electric toothbrush of claim 8, wherein the proximal end of the drive shaft is formed with a circumferential bearing structure to interface with a bearing structure supported by the chassis while providing clearance for attachment of the fluid tube to the fluid inlet.

10. The electric toothbrush of claim 1, wherein the fluid tube is connected to an intermediate connection structure within the electric toothbrush, which in turn is connected with the fluid source.

## Patentansprüche

1. Elektrische Zahnbürste (100), die Folgendes umfasst:
eine Leistungsversorgung (108);
eine Antriebswelle (102), die eine Flüssigkeitsleitung darin und einen an einem proximalen Ende davon positionierten Flüssigkeitseinlass (136) definiert, wobei sich die Antriebswelle von einem proximalen Ende einer Antriebsanordnung erstreckt;
eine Bürstenspitze (200), verbunden mit einem distalen Ende der Antriebswelle, wobei die Bürstenspitze Folgendes umfasst:
einen Bürstenkopf (220), einen Flüssigkeitsauslass innerhalb des Bürstenkopfes und eine innerhalb der Bürstenspitze definierte Flüssigkeitsleitung (222), die mit der Flüssigkeitsleitung in der Antriebswelle fluidisch verbunden ist;
eine elektromagnetische Spule (120), verbunden mit der Leistungsversorgung;
einen Magneten (128), befestigt an der Antriebswelle und positioniert innerhalb eines Magnetfelds der elektromagnetischen Spule;
ein Flüssigkeitsrohr (104), an einem Ende verbunden mit dem Flüssigkeitseinlass an der Antriebswelle und ausgelegt für Verbindung mit einer Flüssigkeitsquelle an einem zweiten Ende; und
ein Gehäuse (106); wobei
das Gehäuse einen Abstand zwischen der Leistungsversorgung und der Antriebsanordnung bereitstellt für Befestigung des Flüssigkeitsrohrs am Flüssigkeitseinlass; und
das proximale Ende der Antriebswelle mit einer Schulter, einem Flansch oder einer anderen umlaufenden Lagerstruktur gebildet ist, um in Kontakt mit einer durch das Gehäuse getragenen Lagerstruktur zu kommen, dabei einen Abstand für eine Befestigung des Flüssigkeitsrohrs am Einlassanschluss bereitstellend.

2. Elektrische Zahnbürste nach Anspruch 1, wobei die Bürstenspitze entfernbar mit der Antriebswelle verbunden ist.

3. Elektrische Zahnbürste nach Anspruch 1, wobei das Flüssigkeitsrohr axial mit dem proximalen Ende der Antriebswelle verbunden ist.

4. Elektrische Zahnbürste nach Anspruch 1, wobei sich die Antriebswelle längs durch eine Mitte der Antriebsanordnung erstreckt.

5. Elektrische Zahnbürste nach Anspruch 4, wobei die Antriebswelle entlang ihrer Länge als ein hohles Rohr, an einem proximalen Ende mit einer Kappe oder einem Stopfen versehen oder massiv, ausgebildet ist.

6. Elektrische Zahnbürste nach Anspruch 1, wobei der Flüssigkeitseinlass einen mit Stacheln oder Rippen versehenen äußeren Umfang aufweist zum Erzeugen einer flüssigkeitsdichten Abdichtungsverbindung mit dem Flüssigkeitsrohr.

7. Elektrische Zahnbürste nach Anspruch 1, wobei die Leistungsversorgung und eine Ladespule gegenüber einer Achse der Antriebswelle axial versetzt sind.

8. Elektrische Zahnbürste nach Anspruch 7, wobei das Flüssigkeitsrohr entlang einer Rotationsachse der Antriebswelle in direkter oder gerader axialer Ausrichtung mit der Antriebswelle positioniert ist.

9. Elektrische Zahnbürste nach Anspruch 8, wobei das proximale Ende der Antriebswelle mit einer umlaufenden Lagerstruktur gebildet ist, um in Kontakt mit einer durch das Gehäuse getragenen Lagerstruktur zu kommen, dabei einen Abstand für die Befestigung des Flüssigkeitsrohrs am Flüssigkeitseinlass bereitstellend.

10. Elektrische Zahnbürste nach Anspruch 1, wobei das Flüssigkeitsrohr mit einer Zwischenverbindungsstruktur innerhalb der elektrischen Zahnbürste verbunden ist, die ihrerseits mit der Flüssigkeitsquelle verbunden ist.

## Revendications

1. Brosse à dents électrique (100), comprenant :
une alimentation électrique (108) ;
un arbre d'entraînement (102) définissant un conduit de fluide à l'intérieur de celui-ci et une entrée de fluide (136) positionnée au niveau d'une extrémité proximale de celui-ci, ledit arbre d'entraînement s'étendant à partir d'une extrémité proximale d'un ensemble d'entraînement ;
une pointe de brosse (200) reliée à une extrémité distale de l'arbre d'entraînement, dans laquelle la pointe de brosse inclut
une tête de brosse (220), une sortie de fluide à l'intérieur de la tête de brosse, et un conduit de fluide (222) défini à l'intérieur de la pointe de brosse qui est relié de manière fluidique au conduit de fluide dans l'arbre d'entraînement ;
une bobine électromagnétique (120) reliée à l'alimentation électrique ;
un aimant (128) fixé à l'arbre d'entraînement et positionné à l'intérieur d'un champ magnétique de la bobine électromagnétique ;
un tube de fluide (104) relié au niveau d'une première extrémité à l'entrée de fluide sur l'arbre d'entraînement et configuré pour être relié à une source de fluide au niveau d'une seconde extrémité ; et
un châssis (106) ; dans laquelle
le châssis fournit un dégagement entre l'alimentation électrique et l'ensemble d'entraînement pour la fixation du tube de fluide à l'entrée de fluide ; et
l'extrémité proximale de l'arbre d'entraînement est formée avec un épaulement, une bride ou une autre structure de palier circonférentiel pour interagir avec une structure de palier supportée par le châssis tout en fournissant un dégagement pour la fixation du tube de fluide à l'orifice d'entrée.

2. Brosse à dents électrique selon la revendication 1, dans laquelle la pointe de brosse est reliée de manière amovible à l'arbre d'entraînement.

3. Brosse à dents électrique selon la revendication 1, dans laquelle le tube de fluide est relié axialement à l'extrémité proximale de l'arbre d'entraînement.

4. Brosse à dents électrique selon la revendication 1, dans laquelle l'arbre d'entraînement s'étend longitudinalement à travers un centre de l'ensemble d'entraînement.

5. Brosse à dents électrique selon la revendication 4, dans laquelle l'arbre d'entraînement est formé comme un tube creux le long de sa longueur, coiffé ou bouché ou solide au niveau d'une extrémité proximale.

6. Brosse à dents électrique selon la revendication 1, dans laquelle l'entrée de fluide a une circonférence externe barbelée ou nervurée pour créer une liaison étanche aux fluides avec le tube de fluide.

7. Brosse à dents électrique selon la revendication 1, dans laquelle l'alimentation électrique et une bobine de chargement sont décalées axialement d'un axe de l'arbre d'entraînement.

8. Brosse à dents électrique selon la revendication 7, dans laquelle le tube de fluide est positionné en alignement axial direct ou droit avec l'arbre d'entraînement le long d'un axe de rotation de l'arbre d'entraînement.

9. Brosse à dents électrique selon la revendication 8, dans laquelle l'extrémité proximale de l'arbre d'entraînement est formée avec une structure de palier circonférentiel pour interagir avec une structure de palier supportée par le châssis tout en fournissant un dégagement pour la fixation du tube de fluide à l'entrée de fluide.

10. Brosse à dents électrique selon la revendication 1, dans laquelle le tube de fluide est relié à une structure de liaison intermédiaire à l'intérieur de la brosse à dents électrique, qui à son tour est reliée à la source de fluide.
